Europäisches Patentamt

European Patent Office

Office européen des brevets

(19)

(11) **EP 0 944 814 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(21) Anmeldenummer: **97953776.8**

(22) Anmeldetag: **10.12.1997**

(51) Int Cl.⁷: **G01F 17/00**

(86) Internationale Anmeldenummer:
**PCT/EP97/06903**

(87) Internationale Veröffentlichungsnummer:
**WO 98/26257 (18.06.1998 Gazette 1998/24)**

(54) **VERFAHREN UND VORRICHTUNG ZUR BESTIMMUNG DES VOLUMENS EINES GASES UND/ODER DES MATERIALVOLUMENS EINER PROBE AUS FESTSTOFF- UND/ODER FLÜSSIGSTOFF-MATERIAL**

METHOD AND DEVICE FOR DETERMINING THE VOLUME OF A GAS AND/OR THE MATERIAL VOLUME OF A SAMPLE OF SOLID AND/OR LIQUID MATERIAL

PROCEDE ET DISPOSITIF POUR LA DETERMINATION DU VOLUME D'UN GAZ ET/OU DE MATIERE D'UN ECHANTILLON DE MATIERE SOLIDE ET/OU LIQUIDE

(84) Benannte Vertragsstaaten:
**CH DE ES FR GB IT LI NL SE**

(30) Priorität: **10.12.1996 DE 19651252**

(43) Veröffentlichungstag der Anmeldung:
**29.09.1999 Patentblatt 1999/39**

(73) Patentinhaber: **Hamilton Bonaduz AG CH-7402 Bonaduz (CH)**

(72) Erfinder:
• **STEGMAIER, Peter, A., Hamilton Bonaduz AG CH-7402 Bonaduz (CH)**
• **VOGEL, Ruedi, Hamilton Bonaduz AG CH-7402 Bonaduz (CH)**

• **CAMENISCH, Johann, L., Hamilton Bonaduz AG CH-7402 Bonaduz (CH)**
• **DEITERS, Dirk, Hamilton Bonaduz AG CH-7402 Bonaduz (CH)**
• **LEUTHOLD, Rudolf, Hamilton Bonaduz AG 7402 Bonaduz (CH)**

(74) Vertreter: **Prechtel, Jörg, Dipl.-Phys. Dr. et al Weickmann & Weickmann, Patentanwälte, Postfach 860 820 81635 München (DE)**

(56) Entgegenhaltungen:
| | |
|---|---|
| DE-A- 3 721 546 | DE-A- 4 315 455 |
| FR-A- 2 682 185 | US-A- 3 585 861 |
| US-A- 3 962 916 | |

## Beschreibung

Die Erfindung betrifft eine Analyseprobenmeßeinrichtung eines Analysesystems zur Bestimmung der einzelnen Materialvolumina mehrerer zu analysierender Proben aus Feststoff- und/oder Flüssigstoff-Material.

Pipettier- und Analyseautomaten, wie diese beispielsweise in der Analysetechnik zur Anwendung gelangen, benötigen für die Ausführung ihrer Aufgaben Pipettiervorrichtungen, welche Flüssigkeiten aus Gefäßen aufnehmen und in andere Gefäße wie Mikrotiterplatten, Cups oder dergleichen abgeben. Dabei ist es in vielen Fällen von großer Bedeutung, daß das transportierte Flüssigkeitsvolumen möglichst genau einem vorgegebenen Wert entspricht, oder daß das von Fall zu Fall variierende Volumen der transportierten Flüssigkeit möglichst exakt für die anschließende Auswertung, insbesondere Analyse des Versuchs, bestimmt werden kann. Entspricht das angenommene Flüssigkeitsvolumen nicht dem tatsächlichen, so können falsche Analysenergebnisse auftreten.

Aus der DE-A-37 21 546 ist eine Vorrichtung zur Ermittlung und Anzeige der Menge eines flüssigen oder festen Lagerguts bekannt. Bei dieser Vorrichtung wird das Volumen eines in einem absperrbaren (Lager-) Behälter befindlichen Lagerguts dadurch bestimmt, daß über eine Änderungsvorrichtung der Gasdruck des über dem Lagergut befindlichen Gases in dem abgesperrten Behälter kontrolliert, verändert und erfaßt wird. In Abhängigkeit von der Gasdruckänderung wird dann das im Behälter befindliche Gasvolumen bestimmt und unter Berücksichtigung des bekannten Behälterleervolumens auf das Volumen des im Behälter befindlichen Lagerguts zurückgerechnet. Als Änderungsvorrichtung wird ein mit dem Behälterinnenraum verbundener Hydraulikkreislauf verwendet, dessen Hydraulikflüssigkeit als Verdrängungskörper dient. Es hat sich gezeigt, daß eine derartige Anordnung bei einer Probenvolumenbestimmung von mehreren Proben zu Problemen führt. Zur Probenvolumenmessung muß eine der Proben zunächst in den Behälter eingefüllt werden, anschließend wird die Messung für diese Probe durchgeführt und schließlich wird der Behälter entleert und gereinigt, bevor die nächste Probe eingefüllt werden kann. Bei derartigen sequentiellen Messungen kommt es zu Verschleppungen und Verlusten von Probenmaterial. Dies ist insbesondere in einem Laborbetrieb zur Analyse von klinischen Proben unerwünscht, wo eine Vielzahl von Proben, meist geringen Volumens, im Rahmen einer Analyse volumetrisch bestimmt werden muß. Ferner führen der Vorbereitungsschritt des Einfüllens der Probe in den Behälter sowie die Schritte des Entleerens und anschließenden Reinigens des Behälters im Laborbetrieb in Anbetracht der hohen Probenzahlen zu einer Verzögerung der Probenvolumenmessung.

Aus der FR-A-2 682 185 und aus der DE-A-43 15 455 sind ähnliche Anlayseprobenmeßeinrichtungen bekannt, wobei statt einer als Hydraulikkreislauf ausgebildeten Änderungsvorrichtung bei diesen bekannten Vorrichtungen Kolben-Zylinder-Anordnungen zur Änderung des Gasdrucks im Behälter verwendet werden.

Es ist Aufgabe der Erfindung, eine Analyseprobenmeßeinrichtung eines Analysesystems bereitzustellen, welche im Laborbetrieb einfach handzuhaben ist und mit welcher eine Vielzahl von Proben innerhalb kurzer Zeit verlust- und verschleppungsfrei analysiert werden kann.

Diese Aufgabe wird durch eine Analyseprobenmeßeinrichtung der eingangs genannten Art gelöst, umfassend: eine Mehrzahl von Probengefäßen, insbesondere Wells einer Mikrotiterplatte oder Cups, in einer Matrixanordnung zur Aufnahme der einzelnen Proben, eine Mehrzahl von Probengefäß-Anschlußteilen in einer der Probengefäß-Matrixanordnung entsprechenden Matrixanordnung oder einer einer Reihe der Probengefäß-Matrixanordnung entsprechenden Reihenanordnung, wobei an jeweils ein Probengefäß-Anschlußteil jeweils ein Probengefäß mit Abdichtung eines den jeweiligen Probengefäß-Innenraum enthaltenden Probenaufnahmeraums ankoppelbar ist, im Falle der Reihenanordnung der Probengefäß-Anschlußteile eine Vorschubeinrichtung zum schrittweisen Verschieben der Probengefäß-Matrixanordnung relativ zur Reihenanordnung in einer Vorschubrichtung quer zur Reihenanordnung, jeweils eine von einer Steuereinheit angesteuerte Änderungsvorrichtung zur kontrollierten Änderung eines der folgenden Parameter Raum-Druck, Raum-Volumen, Raum-Temperatur und Gas-Menge im jeweiligen Probenaufnahmeraum, jeweils einen Sensor zur Messung eines der übrigen Parameter im jeweiligen Probenaufnahmeraum, und eine mit dem jeweiligen Sensor verbundene Auswerteeinheit zur Bestimmung des Gasvolumens im jeweiligen Probenaufnahmeraum anhand der gemessenen Parameteränderungen oder/und zur Bestimmung des Probenvolumens im jeweiligen Probengefäß durch Differenzbildung von Probenaufnahmeraum-Volumen vor der Probenzugabe und Gasvolumen nach der Probenzugabe.

Durch die Erfindung läßt sich das Materialvolumen einer ggf. Gasanteile enthaltenden Probe aus Feststoff- und/oder Flüssigstoff-Material in einem Probenaufnahmeraum einer Probenmeßeinrichtung mit bekanntem Einfüllrestvolumen vor Zugabe der Probe bestimmen. Unter "Einfüllrestvolumen" wird in diesem Zusammenhang das Leervolumen des Probenaufnahmeraums verstanden, ggf. vermindert um das Volumen einer vor Zugabe der interessierenden Proben bereits in Probenaufnahmeraum befindlichen Materialprobe.

Dabei wird nach Zugabe der Probe der geschlossene Probenaufnahmeraum mit Gas beaufschlagt und dessen Gasvolumen im Probenaufnahmeraum als ein Ausgangs-Gasvolumen dadurch bestimmt, daß man wenigstens einen der folgenden Parameter Raum-Druck, Raum-Volumen, Raum-Temperatur und Gas-Menge ändert und aus den gemessenen Änderungen wenigstens eines der übrigen Parameter auf das Ausgangs-Gasvolumen schließt, und daß man das Materialvolumen durch Differenzbildung von Einfüll-Restvolumen und Ausgangs-Gasvolumen bestimmt. Unter "Ausgangs-Gasvolumen" wird in diesem Zusammenhang das Gasvolumen in Probeannahmeraum vor der Parameteränderung verstanden.

Die Materialvolumenmessung der Probe aus Feststoff und/oder Flüssigstoffmaterial wird somit auf eine Gasvolumenbestimmung reduziert. Es ist nicht erforderlich, die Probe zu berühren, beispielsweise durch Eintauchen eines Sensors, so daß die Gefahr einer Kontamination oder einer geringfügigen Volumenveränderung durch Mitnahme von Bestandteilen des Probenmaterials durch den Sensor von vornherein ausgeschlossen ist. Auch wird das tatsächliche (d.h. nicht kompressible) Materialvolumen der Probe erfaßt, also abzüglich etwaiger eingeschlossener Luftvolumina (in Luftbläschen, in Schaumanteilen oder dergleichen), sofern diese Lufteinschlüsse aufgrund entsprechender Elastizität der Probe oder aufgrund unmittelbarer Verbindung zur Gasmenge im Probenaufnahmeraum ausreichend Gelegenheit haben, der Gasparameteränderung zu folgen. Insbesondere bei der besonders bevorzugten Änderung des Raum-Volumens mit resultierender Änderung des Raum-Drucks werden die eingeschlossenen Gasanteile diese Druckänderung in gleicher Weise mitvollziehen. Die Volumenmessung kann unmittelbar am die Probe enthaltenden Probengefäß vorgenommen werden, insbesondere an einem Well der Mikrotiterplatte, an einem Cup oder dergleichen, da hierzu das entsprechende Gefäß lediglich an eine entsprechende Einrichtung (Probengefäß-Anschlußteil) anzukoppeln und anschließend die Parameteränderung durchzuführen ist. Die Handhabung ist deshalb besonders einfach, insbesondere da kein Umschütten in eine separate Meßapparatur vorzunehmen ist. Auch vermeidet diese Vorgehensweise wiederum Fehlerquellen durch bei Manipulationen verlorengehende (verschleppte) Anteile. Auch werden Kontaminationen weitgehend verhindert. Eine Änderung des Materialvolumens durch die Messung selbst ist ausgeschlossen. Das Meßergebnis ist unabhängig von der Gestalt des Probenmaterials, welches beispielsweise in Pulverform oder Granulatform vorliegen kann. Als Probe können Flüssig-Feststoffgemische verwendet werden oder auch Flüssigkeiten mit Schaumanteilen. Das Meßergebnis ist unabhängig von Form und Lage der Probe (z. B. in Gestalt eines Tropfens) im Probenaufnahmeraum. Auch kann das die Probe aufnehmende Gefäß an sich beliebige Form haben. Es muß nur die Möglichkeit bestehen, einen geschlossenen Probenaufnahmeraum zu bilden, um die Gasvolumenmessung durchführen zu können.

Falls ein vor der Zugabe der Probe vollständig leerer Probenaufnahmeraum eingesetzt wird, wird dessen Leervolumen mit dem Einfüll-Restvolumen gleichgesetzt. Dieses Leervolumen kann durch herkömmliche Volumenmeßverfahren bestimmt werden. Im Rahmen der Erfindung kann dieses Volumen auch durch Gasvolumenbestimmung beruhend auf einer Änderung eines der angegebenen Parameter und dem Schluß auf das Ausgangs-Gasvolumen aus der gemessenen Änderung wenigstens eines der übrigen Parameter ermittelt werden. Diese Volumenbestimmung kann man auch dann vornehmen, wenn der Probenaufnahmeraum vor Zugabe der vorgesehenen Probe nicht leer ist. So ist denkbar, daß die Probe als zweite Flüssigkeit einer bereits im Probenaufnahmeraum befindlichen ersten Flüssigkeit zugeführt wird. Dabei wird zunächst das Einfüll-Restvolumen vor Zugabe der zweiten Flüssigkeit, d. h. das ursprüngliche Leervolumen abzüglich des Volumens der ersten Reagenzflüssigkeit, mit Hilfe der vorstehend beschriebenen Gasvolumenmessung bestimmt. Nach Zugabe der zweiten Reagenzflüssigkeit wird dann das übrigbleibende Gasvolumen (Ausgangs-Gasvolumen) bestimmt und dann vom Einfüll-Restvolumen abgezogen. Die Differenz ergibt das gewünschte Materialvolumen der zweiten Flüssigkeit.

In besonders einfacher und dabei zuverlässiger Weise läßt sich bei der beschriebenen Gasvolumenbestimmung der Parameter Raum-Volumen verändern und zwar besonders bevorzugt unter Verwendung einer Kolben-Zylinder-Anordnung mit einem den Probenaufnahmeraum begrenzenden Kolben. In der Regel reicht es auch aus, wenn nur die Änderung des Parameters Raum-Druck verfolgt wird, wobei sich dann das gesuchte Ausgangs-Gasvolumen aus dem Quotienten der Volumenänderung und der Druckänderung multipliziert mit dem End-Druck ergibt.

Alternativ zur Verwendung einer Kolben-Zylinder-Anordnung kann vorgesehen sein, daß man die Gas-Menge im Probenaufnahmeraum mittels einer mit dem Probenaufnahmeraum gekoppelten Druckgasquelle ändert.

Eine derartige Verfahrensweise verringert den gerätetechnischen Aufwand der verwendeten Vorrichtung, da keine gezielte Ansteuerung einer Kolben-Zylinder-Anordnung erforderlich ist. Zur Gasvolumenbestimmung muß lediglich eine definierte Gas-Menge aus der Druckgasquelle in den Probenaufnahmeraum eingeführt werden, und dabei wie vorstehend erläutert, die Änderung eines der übrigen Parameter, bevorzugt die Änderung des Parameters, Raum-Druck, verfolgt werden. Eine besonders einfache Verfahrensweise ergibt sich, wenn die Gas-Mengen-Änderung mittels der Druckgasquelle durch Ansteuerung einer Ventileinrichtung durchgeführt wird. Der Einsatz einer Ventileinrichtung ermöglicht eine exakte Mengen-Dosierung des in den Probenaufnahmeraum eingeführten Gases.

Bei einer weiteren alternativen Verfahrensweise zur Probenvolumenmessung kann vorgesehen sein, daß man die Gas-Menge im Probenaufnahmeraum mittels einer mit dem Probenaufnahmeraum gekoppelten und mit einem Fluid, beispielsweise Wasser, befüllbaren Behälteranordnung ändert, indem man durch gezieltes Zuführen bzw. Abführen von Fluid das in dem Behälter vorhandene Gas-Raum-Volumen ändert. Eine derartige Verfahrensweise erlaubt es, besonders exakte Volumenmessungen durchzuführen, da das Fluid sehr exakt dosiert werden kann, d. h. dem Behälter zugeführt oder aus diesem abgeführt werden kann, und dadurch auch sehr exakt (unter Berücksichtigung des gemessenen Drucks in der Behälteranordnung) die aus dem Behälter in den Probenaufnahmeraum durch das zugeführte Fluid verdrängte Gas-Menge eingestellt werden kann. Ferner ist eine derartige Verfahrensweise ohne großen technischen Aufwand durchführbar. Bevorzugt ist dabei vorgesehen, daß das Zuführen bzw. Abführen von Fluid durch Ansteuerung jeweils eines Zuführventils bzw. Abführventils durchgeführt wird.

Zur Vermeidung von Verschleppung und dadurch hervorgerufene Kontamination von Probenmaterial, insbesondere bei Proben aus Flüssigstoff-Material, kann vorgesehen sein, daß bei der Bestimmung des Materialvolumens der Probe zwischen einem Probengefäß und einem Probengefäß-Anschlußteil eine Folie eingesetzt wird mit wenigstens einer in einen Probengefäß-Innenraum mündenden Durchgangsöffnung. Die Folie verhindert einen direkten mechanischen Kontakt zwischen dem Probengefäß und dem Probengefäß-Anschlußteil, läßt allerdings einen Gasaustausch über die Durchgangsöffnung zu, wodurch eine Gasparameteränderung im gesamten Probenaufnahmeraum wirksam werden kann.

Die beschriebene Verfahrensweise der Ausgangs-Gasvolumenbestimmung eignet sich natürlich auch für Fälle, bei denen lediglich das Volumen eines Gases in einem geschlossenen Raum von Interesse ist.

Eine Probenmeßeinrichtung zur Durchführung des vorstehend angegebenen Verfahrens umfaßt ein Probengefäß, ein Probengefäß-Anschlußteil, an welches das Probengefäß ankoppelbar ist mit Abdichtung eines den Probengefäß-Innenraum enthaltenden Probenaufnahmeraums, eine von einer Steuereinheit angesteuerte Änderungsvorrichtung zur kontrollierten Änderung eines der folgenden Parameter Raum-Druck, Raum-Volumen, Raum-Temperatur und Gas-Menge jeweils im Probenaufnahmeraum, wenigstens einen Sensor zur Messung eines der übrigen Parameter und eine mit wenigstens einem Sensor verbundene Auswerteeinheit zur Bestimmung des Gasvolumens im Probenaufnahmeraum anhand der gemessenen Parameteränderungen und ggf. zur Bestimmung des Materialvolumens durch Differenzbildung von Probenaufnahmeraum-Volumen vor der Probenzugabe und Gasvolumen nach der Probenzugabe.

Mit dieser Probenmeßeinrichtung lassen sich die eingangs in Verbindung mit dem vorstehend erläuterten Verfahren beschriebenen Vorteile erzielen. Ebenso wie dieses Verfahren an sich, kann die Probenmeßeinrichtung generell zur Volumenbestimmung einerseits von Gasen und andererseits von im Vergleich zu Gasen nur wenig kompressiblen Stoffen, wie beispielsweise von Flüssigkeiten verwendet werden. Hervorzuheben ist, daß die Messung des effektiven (abzüglich von Lufteinschlüssen) Probenvolumens, insbesondere Flüssigkeitsvolumens, verschleppungsfrei und ohne Veränderung des Flüssigkeitsvolumens im Zielgefäß (= Probengefäß) erfolgt.

Bevorzugt ist eine Eingabeeinrichtung für Meßparameter, wie z. B. Probengefäß-Innenraumvolumen, vorgesehen, so daß die Apparatur auch mit unterschiedlichen Probengefäßen arbeiten kann, ohne daß vor der Probenzugabe eine Gasvolumenmessung durchgeführt werden muß.

Ein besonders einfacher und zuverlässiger Aufbau ist dann gewährleistet, wenn die Änderungsvorrichtung eine Kolben-Zylinder-Anordnung umfaßt.

Die Kolben-Zylinder-Anordnung kann lediglich angesteuert werden (offene Steuerkette), wenn sichergestellt ist, daß die gewünschten Kolbenpositionen zuverlässig angefahren werden (beispielsweise durch Einsatz eines Schrittmotors). Es können insbesondere auch einfache Bauteile und Antriebsmotoren eingesetzt werden, wenn die Kolben-Zylinder-Anordnung in einer geschlossenen Regelschleife betrieben wird. In diesem Falle ist ein mit der Steuereinheit verbundener Sensor für die momentane Kolbenstellung vorzusehen.

Es können kostengünstige schnellaufende Kleinmotoren eingesetzt werden, wenn die Änderungsvorrichtung einen Spindelantrieb für den Kolben aufweist. Alternativ hierzu ist auch der Einsatz von Hubmagneten oder dergleichen denkbar.

Um die Änderung des Raumdrucks unmittelbar kontrollieren zu können, wird ein mit dem Probenaufnahmeraum verbundener Drucksensor eingesetzt.

In einer vorteilhaften Weiterbildung ist vorgesehen, daß das Probengefäß-Anschlußteil einen im wesentlichen zylindrischen Gasaufnahmeraum umfaßt, in dem der Kolben axialbeweglich und abdichtend angeordnet ist und der nach Ankopplung des Probenaufnahmegefäßes mit dem Probengefäß-Innenraum unmittelbar verbunden ist. Bevorzugt ist ein Gasaufnahmeraum in Form eines geraden Kreiszylinders. Dies ergibt einfachen und kompakten Aufbau bei zuverlässiger Funktion.

Hierzu trägt auch bei, wenn der Probengefäß-Innenraum und der Gasaufnahmeraum miteinander im wesentlichen fluchten und vorzugsweise im wesentlichen gleichen Querschnitt aufweisen.

Zur zuverlässigen Abdichtung zwischen Probengefäß und Probengefäß-Anschlußteil dient eine Dichtung (Ring, Scheibe oder dergleichen) zwischen beiden Teilen.

Alternativ zu einer Probenmeßeinrichtung mit Kolben-Zylinder-Anordnung kann vorgesehen sein, daß die Änderungsvorrichtung eine steuerbare Druckgasquelle, insbesondere eine Druckgasflasche, umfaßt, mittels welcher nach Ankopplung des Probengefäßes die Gas-Menge im Probenaufnahmeraum änderbar ist.

Als Druckgasquelle kommt ferner ein Druckluftsystem bzw. eine Kompressorvorrichtung in Frage. Bevorzugt ist dabei vorgesehen, daß zur Überwachung der Gas-Mengen-Änderung eine Überwachungseinrichtung, insbesondere eine Gas-Strömungs-Meßeinrichtung, zwischen der Druckgasquelle und dem Probenaufnahmeraum vorgesehen ist. Somit kann nach Maßgabe der von der Überwachungseinrichtung angegebenen in den Probenaufnahmeraum eingeströmten Gas-Menge und des im Probenaufnahmeraum herrschenden Drucks auf das Probenvolumen geschlossen werden.

Alternativ zu einer Probenmeßeinrichtung mit Druckgasquelle kann vorgesehen sein, daß die Änderungsvorrichtung eine abschließbare, mit einem Fluid, beispielsweise Wasser, befüllbare Behälteranordnung aufweist, die derart gestaltet ist, daß durch Zuführen bzw. Abführen von Fluid in die Behälteranordnung die im Probenaufnahmeraum vorhandene Gas-Menge änderbar ist. Bei einer Fluidzufuhr in die Behälteranordnung wird das dem Volumen des zugeführten Fluids entsprechende Gasvolumen aus dem Behälter verdrängt und zumindest teilweise in den Probenaufnahmeraum eingedrückt. Durch Überwachung des Druckanstiegs im Probenaufnahmeraum und des zugeführten Fluidvolumens läßt sich auf das Probenvolumen schließen. Dabei ist es von Vorteil, wenn die Behälteranordnung jeweils eine gesonderte, jeweils mit einer steuerbaren Ventilvorrichtung versehene Zuführ- und Abführleitung aufweist.

Bei einer Weiterbildung der Probenmeßeinrichtung ist ein gesonderter Drucksensor zur Messung des Innendrucks in der Behälteranordnung vorgesehen. Mit diesem Drucksensor läßt sich unabhängig von der Druckänderung im Probenaufnahmeraum exakt die Druckänderung in der Behälteranordnung bestimmen, was zu einer exakten Bestimmung der Gas-Mengen-Änderung im Probenaufnahmeraum genutzt werden kann. Mögliche Druckverluste bei der Überleitung des Gases aus der Behälteranordnung in den Probenaufnahmeraum, beispielsweise Krümmerverluste oder Drosselverluste, wirken sich somit nicht auf die Genauigkeit der Probenvolumenmessung aus.

Ferner ist es für eine Probenvolumenbestimmung von Vorteil, wenn der Füllstand in der Behälteranordnung über eine Füllstands-Meßeinrichtung erfaßbar ist. Dadurch kann jederzeit das in der Behälteranordnung befindliche Gasvolumen indirekt, d. h. über den Fluidpegel, erfaßt werden, was eine anschließende Probenvolumenmessung durch Änderung des Parameters Gas-Volumen im gesamten Probenaufnahmeraum erleichtert.

Zur Vermeidung von Verschleppung von Probenmaterial, insbesondere Flüssigstoff-Probenmaterial, welches bei einer Messung auf das Probengefäß-Anschlußteil übertragen wird und bei einer darauffolgenden Messung von diesem auf das nächste anzukoppelnde Probengefäß übertragen wird, ist vorgesehen, daß die Probenmeßeinrichtung zwischen dem Probengefäß und dem Probengefäß-Anschlußteil eine Folie, vorzugsweise Kunststoff-Folie, mit wenigstens einer in den Probengefäß-Innenraum mündenden Durchgangsöffnung aufweist, wobei die Folie nach Abkopplung des Probengefäßes entfernbar ist. Somit werden Probenbestandteile von einem Probengefäß nicht auf das Probengefäß-Anschlußteil übertragen, sondern auf der Folie zurückgehalten und nach anschließendem Entfernen der Folie mit entfernt. Für eine nachfolgende Messung wird zwischen dem Probengefäß-Anschlußteil und dem entsprechenden Probengefäß eine frische Folie eingesetzt und somit die Messung verschleppungsfrei durchgeführt.

Zur einfachen Handhabung ist vorgesehen, daß die Folie von einer Folienbahn gebildet ist, die laufend von einer Folien-Vorratsrolle abziehbar und nach Vorbeilauf am Probengefäß-Anschlußteil auf eine weitere Rolle aufwickelbar ist. Durch eine derartige Anordnung läßt sich schnell eine Vielzahl von Meßoperationen ohne Verschleppung von Proben-Material durchführen. Bevorzugt ist dabei vorgesehen, daß die augenblickliche Folienposition über einen Foliensensor erfaßt wird, wodurch die Position der jeweiligen Durchgangsöffnung bestimmt wird. Dadurch kann die Folien-Durchgangsöffnung in die richtige Position relativ zum Probengefäß und zum Probengefäß-Anschlußteil gebracht werden.

Wie eingangs zur Lösung der der vorliegenden Erfindung zugrundeliegenden Aufgabe bereits angegeben ist, um der hohen Probenzahl in einem Laborbetrieb gerecht zu werden und um eine Automatisierung der Probenvolumenmessung zu ermöglichen, vorgesehen, daß eine Mehrzahl von Probengefäßen in einer Matrixanordnung, beispielsweise in Form einer Mikrotiterplatte, angeordnet ist. Entsprechend ist eine Probenmeßeinrichtung vorgesehen, bei welcher eine Mehrzahl von Probengefäß-Anschlußteilen in einer der Probengefäß-Matrixanordnung entsprechenden Probengefäß-Anschlußteil-Matrixanordnung oder einer Reihenanordnung quer zur Vorschubrichtung angeordnet ist, in welcher Vorschubrichtung die Probengefäß-Matrixanordnung relativ zur Reihenanordnung mittels einer Vorschubeinrichtung schrittweise verschiebbar ist. Dadurch können, wie eingangs bereits erläutert, mehrere Proben, welche sich jeweils in einem Probengefäß befinden, gleichzeitig volumetrisch bestimmt werden.

Um auch bei einer derartigen Mehrfachprobenbestimmung das Risiko von Probenmaterial-Verschleppungen auszuschließen, ist vorgesehen, daß zwischen die Probengefäße und die Probengefäß-Anschlußteile eine Folie, wie vorstehend beschrieben, eingesetzt wird, wobei die Folie eine der Matrixanordnung bzw. Reihenanordnung der Mehrzahl von Probengefäß-Anschlußteilen entsprechende Mehrfachlochung aufweist.

Zum einfacheren "Handling" der Folie ist eine die Folien-Vorratsrolle und die weitere Rolle haltende Folien-Kassette vorgesehen. Eine derartige Folien-Kassette kann mit wenigen Handgriffen in die Probenmeßeinrichtung eingesetzt werden. Im eingesetzten Zustand kann die Folien-Vorratsrolle dann manuell oder, wie bevorzugt, über an den Rollen angreifende Antriebsmittel automatisch abgewickelt werden.

Zur einfacheren Kalibrierung der Probenmeßeinrichtung, insbesondere im Laborbetrieb mit hohen Probendurchlaufzahlen ist vorgesehen, daß im Bereich an der Probengefäß-Matrixanordnung wenigstens ein Referenzvolumen-Gefäß, vorzugsweise in einer der Anordnung der Probengefäß-Anschlußteile entsprechenden Anordnung, vorgesehen ist. Eine einfache Ausgestaltung ergibt sich insbesondere dann, wenn das wenigstens eine Referenzvolumen-Gefäß an einem die Probengefäß-Anordnung tragenden Schlitten ausgebildet ist.

Die Erfindung wird im folgenden an bevorzugten Ausführungsbeispielen anhand der Zeichnung erläutert. Es zeigt:

Fig. 1 eine schematische Darstellung einer erfindungsgemäßen Probenmeßeinrichtung mit einer Kolben-Zylinder-Anordnung zur Änderung des Raum-Volumens,

Fig. 2 eine schematische Darstellung einer erfindungsgemäßen Probenmeßeinrichtung mit einer Kolben-Zylinder-Anordnung zur Änderung der Gasmenge,

Fig. 3 eine schematische Darstellung einer erfindungsgemäßen Probenmeßeinrichtung mit einer Druckgasquelle zur Änderung der Gas-Menge,

Fig. 4 eine schematische Darstellung einer erfindungsgemäßen Probenmeßeinrichtung mit einer befüllbaren Behälteranordnung zur Änderung der Gas-Menge,

Fig. 5 eine schematische Seitenansicht einer erfindungsgemäßen Probenmeßeinrichtung mit aufgeschnittener Folien-Kassette, und

Fig. 6 eine perspektivische Ansicht einer erfindungsgemäßen Probenmeßeinrichtung mit einer teilweise eingeschobenen Folien-Kassette und einer eingesetzten Mikrotiterplatte.

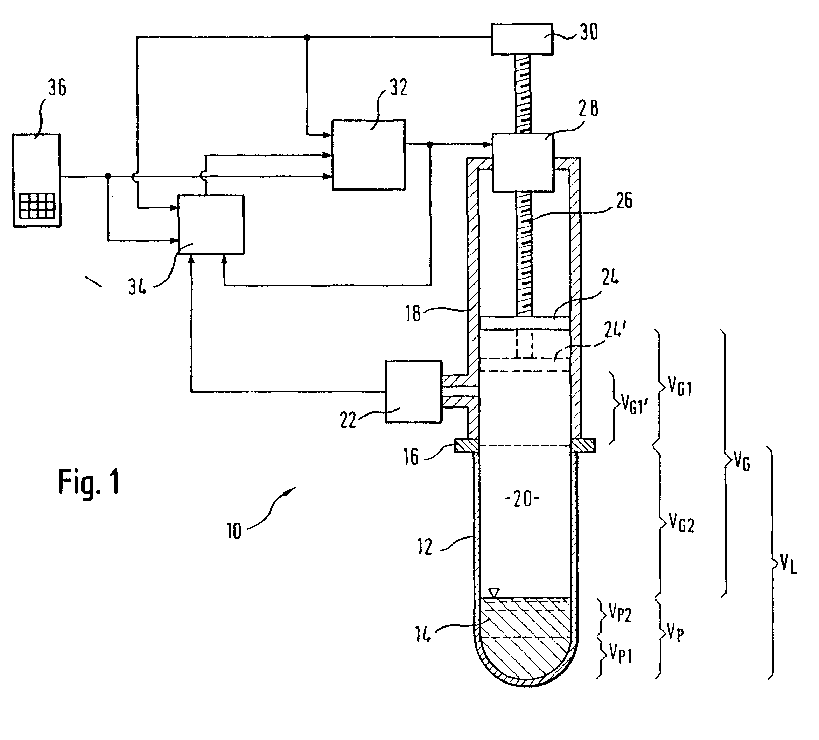

In Bezug auf Fig. 1 wird eine erfindungsgemässe Probenmeß-einrichtung 10 gezeigt. Diese umfaßt ein Probengefäß 12 zur Aufnahme einer Probe 14 aus Feststoff- und/oder Flüssigstoff-Material. Das Probengefäß 12 ist mit Hilfe einer Dichtung 16 an das Probengefäß-Anschlußteil 18 abgedichtet angeschlossen, um nach der Ankopplung einen geschlossenen Probenaufnahmeraum 20 zu bilden.

Mit dem Probenaufnahmeraum 20, insbesondere mit dem Probengefäß-Anschlußteil-Innenraum ist ein Drucksensor 22 verbunden, um den Raumdruck p im Probenaufnahmeraum 20 zu messen. Ferner ist in dem Probengefäß-Anschlußteil 18 ein Kolben 24 axialbeweglich und abdichtend angeordnet. Dieser kann über einen Bewegungsumformer in Form einer Spindel 26, die von einer Antriebseinheit 28 angetrieben wird, in dem Probengefäß-Anschlußteil 18 axial verschoben werden. Die gegenwärtige Kolbenstellung kann mit Hilfe eines Sensors 30 genau erfaßt werden. Der Sensor 30 ist mit seinem Signalausgang mit einer Steuereinheit 32 und einer Auswerteeinheit 34 elektrisch verbunden. Ebenso ist der Drucksensor 22 mit seinem Signalausgang mit der Auswerteeinheit 34 elektrisch verbunden, um ein den im Probenaufnahmeraum 20 gemessenen Druck repräsentierendes, elektrisches Signal an die Auswerteeinheit 34 zu übertragen. Ferner umfaßt die Probenmeßeinrichtung eine Eingabeeinrichtung 36, die als Schnittstelle dient, und über die Meßparameter, wie z. B. Probengefäß-Innenraumvolumen oder ähnliches, eingegeben werden können.

Bei der Proben-Volumenmessung wird wie folgt vorgegangen. Das Probengefäß 12 mit vorgegebenem Leervolumen $V_L$ wird mit einer Probe 14 aus Feststoff- und/oder Flüssigstoff-Material unbekannten Volumens $V_P$ befüllt. Sodann wird das Probengefäß 12 an das Probengefäß-Anschlußteil 18, ggf. über die Dichtung 16, abdichtend angeschlossen. Es bildet sich ein abgeschlossenes Gasvolumen $V_G$, das von der Unterseite des Kolbens 24, von den Wänden des Probengefäß-Anschlußteils 18, von den Wänden des Probengefässes 12 und von der Probe 14 begrenzt wird.

Das Gasvolumen $V_G$ ist somit die Summe des momentanen (durch die Stellung des Kolbens definierten und als bekannt voraussetzbaren), vom Kolben 24 in Fig. 1 nach oben begrenzten Teilvolumens $V_{G1}$ des Probengefäß-Anschlußteils 18 und des Gasvolumens $V_{G2}$ im Probengefäß 12 oberhalb der Probe 14:

$$V_G = V_{G1} + V_{G2} \qquad (1)$$

Als nächstes wird durch entsprechende Betätigung der Eingabeeinrichtung 36 oder automatisch nach Anschließen des Probengefäßes 12 an das Probengefäß-Anschlußteil 18 durch die Steuereinheit 32 eine Axialbewegung des Kolbens 24 veranlaßt, bis dieser eine in Fig. 1 strichliert angedeutete und mit 24' bezeichnete, vorgegebene, untere Endstellung erreicht hat.

Hierzu steuert die Steuereinheit 32 die Antriebseinheit 28 dementsprechend ggf. mit Rückmeldung der jeweiligen momentanen Kolbenposition über den Sensor 30 an. Das Teilvolumen im Probengefäß-Anschlußteil 18 wird auf diese Weise auf einen vorgegebenen bzw. aus der momentanen, vom Sensor 30 erfaßten Kolbenstellung ableitbaren Wert $V_{G1}'$ reduziert; das Gasvolumen $V_G$ wird somit nach Gleichung (1) um den gleichen Betrag reduziert.

Die Folge der Reduzierung des Gasvolumens $V_G$ ist eine Änderung der Parameter Raum-Temperatur von T auf T' und Raum-Druck von p auf p'. Diese Änderung kann von entsprechenden Sensoren erfaßt werden. Mit für diese Zwecke ausreichender Genauigkeit gilt gemäß der allgemeinen Gasgleichung:

$$V_G = (V_{G1}' - V_{G1}) / ((p \times T')/(p' \times T) - 1) \qquad (2)$$

Für das gesuchte Probenvolumen gilt:

$$V_P = V_L + V_{G1} - V_G \qquad (3)$$

Im folgenden soll angenommen werden, daß nach einer Volumenänderung durch eine Kolbenverschiebung ausreichend lange gewartet wird, bis ein Temperaturausgleich, d. h. $T' = T$, zwischen Probenaufnahmeraum 20 und Umgebung stattgefunden hat, so daß nur der Parameter Raum-Druck $(p, p')$ bei der Volumenmessung berücksichtigt werden muß. Hierzu werden vom Drucksensor 22 die die Druckwerte $p$ und $p'$ vor bzw. nach der Volumenänderung angebenden, elektrischen Signale an die Auswerteeinheit 34 übertragen. Ebenso werden vom Sensor 30 die die erfaßten Spindel- und damit Kolbenpositionen 24 und 24' vor bzw. nach der Verschiebung des Kolbens 24 angebenden, elektrischen Signale an die Auswerteeinheit 34 übertragen.

Aus diesen Meßgrößen werden die Parameterwerte $V_{G1}$, $V_{G1}'$ und $p$, $p'$ berechnet und mit Hilfe der Gleichung (2) der Parameterwert $V_G$, d. h. das Gasvolumen im Probenaufnahmeraum, bestimmt. Da das Leervolumen des Probengefäßes 12 $V_L$ bekannt ist, läßt sich somit die gesuchte Größe des Probenvolumens $V_P$ mit Hilfe von Gleichung (3) ermitteln.

Folgt dagegen nach einer ersten Probenzugabe, z. B. mit in vorstehender Weise gemessenem Probenvolumen $V_{P1}$ mit in Fig. 1 mit unterbrochener Linie angedeutetem Pegel, eine weitere Probenzugabe in das Probengefäß 12 mit unbekanntem Probenvolumen $V_{P2}$, so wird das Probengefäß 12 erneut abdichtend an das Probengefäß-Anschlußteil 18 angekoppelt und das gesamte Probenvolumen $V_P$ gemäß vorstehender Beschreibung, also durch erneute Volumenänderung und Druckmessung vor bzw. nach der Volumenänderung, unter Verwendung der Gleichungen (2) und (3) bestimmt. Für das gesamte Probenvolumen $V_P$ gilt die folgende Gleichung:

$$V_P = V_{P1} + V_{P2} \qquad (4)$$

Das gesuchte Probenvolumen $V_{P2}$ ergibt sich dann unmittelbar aus Gleichung (4).

Ist das Leervolumen des Probengefäßes 12 $V_L$ nicht bekannt, so kann dieses vor Zugabe einer Probe 14 mit Hilfe der erfindungsgemäßen Vorrichtung 10 ebenfalls bestimmt werden. Die Bestimmung des Leervolumens des Probengefäßes 12 $V_L$ erfolgt wiederum durch Volumenänderung mit Druckmessung unter Verwendung der Gleichungen (2) und (3), wobei das Probenvolumen $V_P$ in Gleichung (3) gleich Null gesetzt werden kann.

Ferner kann die beschriebene Probenvolumen-Meßeinrichtung 10 durch einen an geeigneter Stelle angebrachten Temperatursensor ergänzt werden. In diesem Fall muß die oben gemachte Annahme, daß nach einer Volumenänderung ausreichend lange gewartet wird, bis ein Temperaturausgleich zwischen Probenaufnahmeraum 20 und Umgebung stattgefunden hat, nicht erfüllt sein. Die vom Temperatursensor vor bzw. nach einer Volumenänderung erfaßten Temperaturwerte $T$ bzw. $T'$ werden dann in Form von elektrischen Signalen an die Auswerteeinheit 34 übertragen und gehen unmittelbar, ebenso wie die in vorstehender Weise bestimmten Parameterwerte $p$ bzw. $p'$ $V_{G1}$ bzw. $V_{G1}'$, in die Gleichung (2) zur Bestimmung des Gasvolumens $V_G$ ein.

Bei einer derartigen Anordnung kann als zusätzlicher Parameter (anstelle des Parameters Raum-Temperatur $T$) die Geschwindigkeit der Kolbenbewegung berücksichtigt werden, die sich aus dem Quotienten der Änderung der Kolbenstellung und der für diese Änderung benötigten Zeit ergibt. Aus der Geschwindigkeit der Kolbenbewegung läßt sich aufgrund von Vergleichsmessungen die zu erwartende Temperaturänderung bei der Kolbenverschiebung abschätzen und in Formel (2) einsetzen (unter Annahme einer vorgegebenen oder gemessenen Raum-Temperatur).

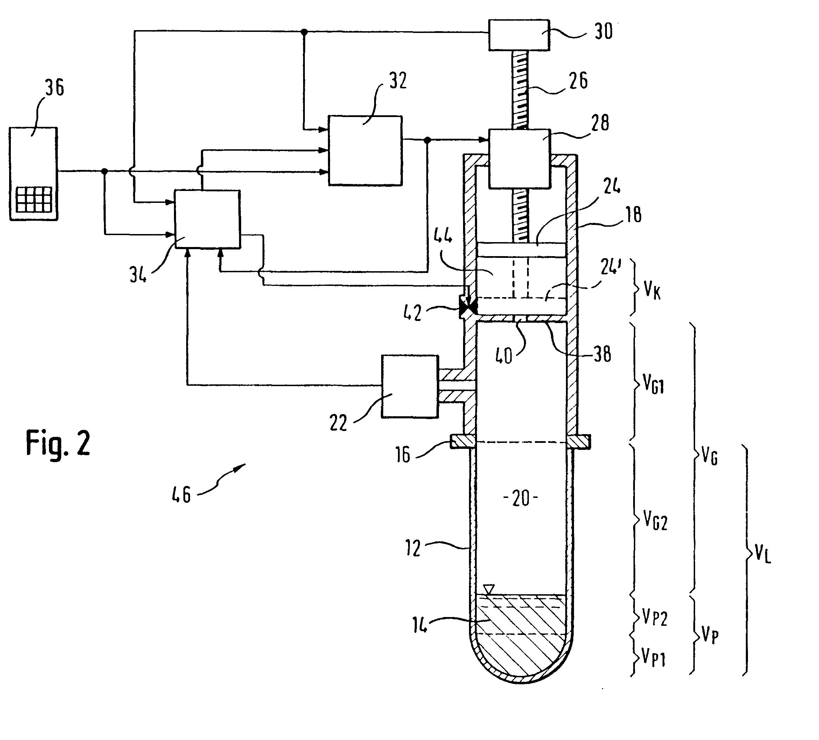

In Fig. 2 wird eine erfindungsgemäße Probenmeßeinrichtung 46 gemäß Fig. 1 gezeigt, wobei bei diesem Ausführungsbeispiel der geänderte Parameter im Probenaufnahmeraum 20 nicht der Raum-Druck $p$, sondern die Gasmenge $N$ ist. Im folgenden soll nur auf die Unterschiede zwischen dem Ausführungsbeispiel aus Fig. 1 und dem Ausführungsbeispiel aus Fig. 2 eingegangen werden. Die Komponenten des Ausführungsbeispiels aus Fig. 2, welche dieselbe Aufgabe und/oder Funktion haben wie im vorangehend beschriebenen Ausführungsbeispiel 1, sind mit denselben Bezugszeichen bezeichnet und werden nachfolgend nicht weiter erklärt.

Im Unterschied zum Ausführungsbeispiel aus Fig. 1 ist im Ausführungsbeispiel der Fig. 2 der Kolben 24 in einer Kolbenkammer 44 angeordnet. Zwischen dem Probenaufnahmeraum 20 und der Kolbenkammer 44 befindet sich eine horizontale Wand 38. In dieser Wand 38 ist eine vertikal angeordnete Durchgangsbohrung 40 vorgesehen, über welcher die Kolbenkammer 44 mit dem Probenaufnahmeraum 20 zum Gasaustausch verbunden ist. Ferner ist in einer vertikalen Wand des Probengefäß-Anschlußteils 18 ein Zweiwegeventil 42 angeordnet, welches von der Steuereinheit 32 angesteuert wird, um geöffnet und geschlossen zu werden. Dieses Zweiwegeventil 42 verbindet die Kolbenkammer 44 mit der Umgebung. Der Sensor 22 schließt bei diesem Ausführungsbeispiel neben einem Drucksensor auch einen integral angeordneten Temperatursensor ein, der jedoch auch separat im Probenaufnahmeraum 20 angeordnet sein kann.

Bei der Proben-Volumenmessung mit einer Vorrichtung gemäß diesem Ausführungsbeispiel wird entsprechend dem Ausführungsbeispiel aus Fig. 1 wie folgt vorgegangen. Das Probengefäß 12 mit vorgegebenem Leervolumen $V_L$ wird mit einer Probe 14 aus Feststoff- und/oder Flüssigstoff-Material unbekannten Volumens $V_P$ befüllt. Sodann wird das Probengefäß 12 an das Probengefäß-Anschlußteil 18, ggf. über die Dichtung 16, abdichtend angeschlossen. Es bildet sich ein Gasvolumen $V_G$, das von der Unterseite der Wand 38, von den Wänden des Probengefäß-Anschlußteils 18 unterhalb der Wand 38, von den Wänden des Probengefäßes 12 und von der Probe 14 selbst begrenzt wird. Das Gasvolumen $V_G$ setzt sich somit aus der Summe des konstanten Teilvolumens $V_{G1}$ im Probengefäß-Anschlußteil 18 unterhalb der Wand 38 und des Gasvolumens $V_{G2}$ im Probengefäß 12 oberhalb der Probe 14 zusammen. Es gilt die vorstehende Gleichung (1).

In der Kolbenkammer 44 ist bei geschlossenem Zweiwegeventil 42 ebenfalls ein Gasvolumen $V_K$ eingeschlossen, welches von der Unterseite des Kolbens 24, den Wänden des Probengefäß-Anschlußteils 18 oberhalb der Wand 38 und der Oberseite der Wand 38 begrenzt ist. Die Kolbenkammer 44 kann selbst bei angekoppeltem Probengefäß 12 durch Öffnen des Zweiwegeventils 42 und durch eine nach oben gerichtete Axialbewegung des Kolbens 24 mit Gas (Luft) aus der Umgebung gefüllt werden. Die Axialbewegung des Kolbens 24 wird durch eine Ansteuerung der Antriebseinheit 28 von der Steuereinheit 32 mit Rückmeldung der jeweils momentanen Kolbenposition über den Sensor 30 bewirkt.

Nach Anschließen des Probengefäßes 12 an das Probengefäß-Anschlußteil 18 wird entweder automatisch oder über manuelle Eingabe über die Eingabeeinrichtung 36 die Probvolumenbestimmung gestartet. Dabei wird zunächst das Zweiwegeventil 42 geschlossen. Über die vertikale Durchgangsbohrung 40 können dann der Probenaufnahmeraum 20 und die Kolbenkammer 44 miteinander kommunizieren.

Im nächsten Schritt wird das in der Kolbenkammer 44 befindliche Gasvolumen $V_K$ durch eine Axialbewegung des Kolbens 24 in eine in Fig. 2 strichliert dargestellte, vorbestimmte Kolbenendposition 24' auf den Wert 0 reduziert. Dadurch wird eine Gasmenge $\Delta N$ in den Probenaufnahmeraum 20 eingedrückt, die gleich der vor der Kolbenverschiebung in der Kolbenkammer mit dem Volumen $V_K$ befindlichen Gasmenge ist. Gemäß der allgemeinen Gasgleichung ergibt sich für die in dem Probenaufnahmeraum 20 eingedrückte Gasmenge $\Delta N$ folgende Beziehung:

$$\Delta N = (p \times V_K)/(R \times T) \qquad (5)$$

wobei p den vom Druckmesser 22 vor der Kolbenverschiebung gemessenen Raum-Druck,

$V_K$ das vor der Kolbenverschiebung in der Kolbenkammer befindliche Gas-volumen,

T die vom Temperaturmesser 22 vor der Kolbenverschiebung gemessene Raum-Temperatur und

R die universelle Gaskonstante bezeichnet.

Die nach der Volumenänderung der Kolbenkammer 44 im Probenaufnahmeraum 20 befindliche Gasmenge N' setzt sich aus der ursprünglich vor der Öffnung des Zweiwegeventils 40 im Probenaufnahmeraum 20 befindlichen Gasmenge N und der zusätzlich eingedrückten Gasmenge $\Delta N$ zusammen:

$$N' = N + \Delta N \qquad (6)$$

Durch die Axialbewegung des Kolbens 24, d. h. durch Eindrücken der Gasmenge $\Delta N$ in den Probenaufnahmeraum 20 ändern sich die Parameterwerte des Raum-Drucks von p auf p' und der Raum-Temperatur von T auf T'. Diese Parameteränderungen werden vom Druck- bzw. Temperatursensor 22 erfaßt und an die Auswerteeinheit 34 in Form von sie angebenden elektrischen Signalen übertragen.

Das Gasvolumen $V_G$ im Probenaufnahmeraum 20 kann nun mit Hilfe der nachstehenden Gleichung (7), die man aus den Gleichungen (5), (6) und der allgemeinen Gasgleichung erhält, durch Einsetzen der gemessenen bzw. berechneten Größen bestimmt werden:

$$V_G = \Delta N \times R/(p'/T' - p/T) \qquad (7)$$

Falls es einfacher erscheint, mit Gasmasse $\Delta m$ zu rechnen, so gilt:

$$\Delta m = \Delta N \times M \qquad (8)$$

wobei M die molare Masse des verwendeten Gases bezeichnet.

Da das Leervolumen des Probengefäßes 12 $V_L$ bekannt ist, läßt sich somit das Probenvolumen $V_P$ ermitteln, gemäß der Gleichung:

$$V_P = V_L - V_G \qquad (9)$$

Folgt dagegen nach einer ersten Probenzugabe, z. B. mit in vorstehender Weise gemessenem Probenvolumen $V_{P1}$ mit in Fig. 2 mit unterbrochener Linie angedeutetem Pegel, eine weitere Probenzugabe in das Probengefäß 12 mit unbekanntem Probenvolumen $V_{P2}$, so wird die Kolbenkammer 44 erneut mit Gas aus der Umgebung gefüllt. Ferner wird das Probengefäß 12 erneut an das Probengefäß-Anschlußteil 18 abdichtend angekoppelt und nach vorstehend geschilderter Weise das gesamte Probenvolumen $V_P$ durch eine erneute Gasmengenänderung und Druck- und Temperaturmessung und durch Verwendung der Gleichungen (5), (7) und (8) bestimmt. Aus Gleichung (4) ergibt sich dann unmittelbar das unbekannte Probenvolumen $V_{P2}$.

Ist das Leervolumen des Probengefäßes 12 $V_L$ nicht bekannt, so kann dieses vor Zugabe einer Probe 14 mit Hilfe der erfindungsgemäßen Vorrichtung 46 ebenfalls bestimmt werden. Die Bestimmung des Leervolumens des Probengefäßes 12 $V_L$ erfolgt wiederum durch Gasmengenänderung mit Druck- und Temperaturmessung unter Verwendung der Gleichungen (5), (7) und (8), wobei das Probenvolumen $V_P$ in Gleichung (8) gleich Null gesetzt werden kann.

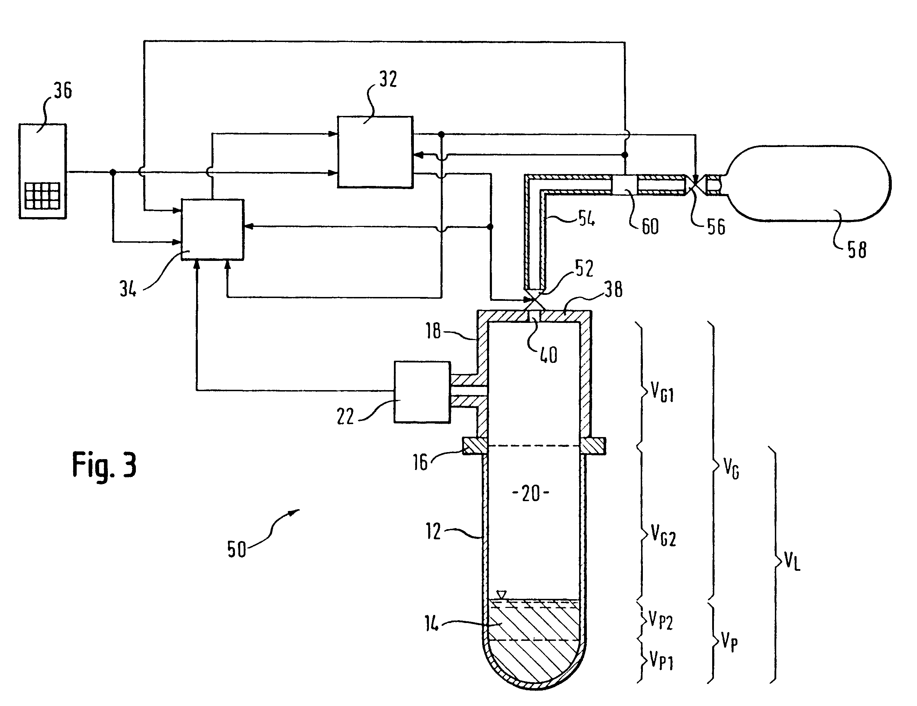

Fig. 3 zeigt eine erfindungsgemäße Probenmeßeinrichtung 50 einer weiteren Ausführungsform, wobei die mit den vorstehend beschriebenen Komponenten übereinstimmenden Komponenten dieselben Bezugszeichen tragen. Wie bei der Probenmeßeinrichtung gemäß dem Ausführungsbeispiel aus Fig. 2 ist bei der Probenmeßeinrichtung gemäß Fig. 3 der geänderte Parameter ebenfalls die Gas-Menge N.

Direkt an die Durchgangsbohrung 40 schließt sich ein steuerbares Ventil 52 an, welches an seiner der Durchgangsbohrung fernen Seite mit einer Rohrleitung 54 gekoppelt ist. Die Rohrleitung 54 weist an ihrem anderen Ende ein weiteres über die Steuereinrichtung 32 ansteuerbares Ventil 56 auf, welches im geöffneten Zustand den Innenraum der Rohrleitung 54 mit dem Innenraum einer Druckgasflasche 58 verbindet. Bevorzugt handelt es sich bei dem Ventil 56 um ein Proportionalventil, welches in seinem Öffnungsgrad stufenlos verstellbar ist. Zwischen dem Ventil 52 und dem Ventil 56 ist in der Rohrleitung 54 eine Gas-Strömungs-Meßeinrichtung 60 angeordnet, mittels welcher die durch die Rohrleitung 54 in den Probenaufnahmeraum 20 einströmende Gas-Menge bestimmt werden kann. Die, beispielsweise als Pitot-Sonde, Prandtl-Staurohr oder Hitzdraht-Sonde mit zugehöriger Wandlerschaltung ausgebildete, Gas-Strömungs-Meßeinrichtung 60 ist mit der Auswerteeinheit 34 verbunden, welche ihrerseits nach Maßgabe der erfaßten Gas-Menge an die Steuereinheit 32 Signale zur Steuerung der Ventile 52 und 56 ausgibt.

Bei der Proben-Volumenmessung mit einer Vorrichtung gemäß dem in Fig. 3 gezeigten Ausführungsbeispiel wird entsprechend dem Ausführungsbeispiel aus Fig. 2 vorgegangen, wobei die dort erforderliche Kolbenbewegung lediglich durch gezieltes Öffnen der Ventile 52 und 56 ersetzt wird. Die Gas-Mengen-Änderung im Probenaufnahmeraum 20 beruht bei geöffnetem Ventil 52 auf einem durch das Proportionalventil 56 über die Steuereinheit 32 geregelten Überströmen von Druckgas aus der Druckgasflasche 58 in den Probenaufnahmeraum 20. Die Berechnung des Probenvolumens erfolgt in Analogie zum Ausführungsbeispiel nach Fig. 2, wobei das Volumen $V_K$ der in der Kolbenkammer befindlichen Gas-Menge durch ein Volumen $V_Q$ ersetzt wird, welches aus der Druckgasflasche 58 abgegeben und über die Gas-Strömungs-Meßeinrichtung 60 erfaßt wird.

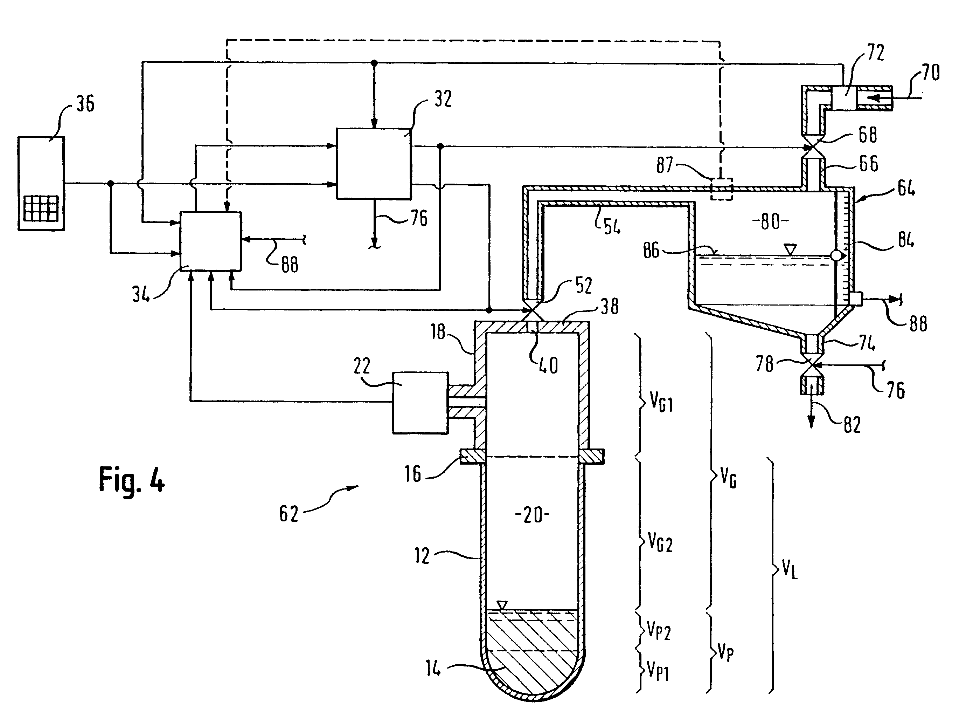

Fig. 4 zeigt eine vierte Ausführungsform der erfindungsgemäßen Probenmeßeinrichtung, wobei auch bei diesem Ausführungsbeispiel ähnlich zu den Ausführungsbeispielen gemäß Fig. 2 und 3, der geänderte Parameter im Probenaufnahmeraum 20 die Gas-Menge N ist.

Auch bei diesem Ausführungsbeispiel schließt sich an die Durchgangsöffnung 40 unmittelbar ein über die Steuereinrichtung 32 steuerbares Ventil 52 an. Dieses verbindet in seinem geöffneten Zustand den Innenraum einer Rohrleitung 54 mit dem Probenaufnahmeraum 20. An das andere Ende der Rohrleitung 54 schließt sich eine Behälteranordnung 64 an. Die Behälteranordnung 64 ist über einen Zulauf 66 befüllbar, der über ein von der Steuereinheit 32 aus steuerbares Ventil 68 geöffnet bzw. geschlossen werden kann. Im geöffneten Zustand des Ventils 68 kann gemäß Pfeil 70 eine über einen Durchflußmesser 72 erfaßbare Fluidmenge in die Behälteranordnung 64 einfließen.

Ferner umfaßt die Behälteranordnung 64 einen Ablauf 74, der über ein über die Steuereinrichtung 32 mittels einer der einfachen Darstellung halber unterbrochen dargestellten Steuerleitung 76 steuerbares Ventil 78 geöffnet bzw. verschlossen werden kann. Im geöffneten Zustand fließt das in einem Behälter-Innenraum 80 befindliche Fluid gemäß Pfeil 82 aus dem Behälter aus. Das gemäß Pfeil 70 zufließende Fluid und das gemäß Pfeil 82 abfließende Fluid kann in einem Kreislauf umgewälzt werden. Es ist jedoch auch denkbar, den Zulauf gemäß Pfeil 70 an eine herkömmliche Wasserversorgungsleitung anzuschließen, und den Ablauf gemäß Pfeil 82 in eine Kanalisation zu leiten. Beide Möglichkeiten wurden in Fig. 4 der einfachen Darstellung halber weggelassen.

Im Behälter-Innenraum 80 ist ferner eine Füllstands-Meßeinrichtung 84 angebracht, welche den augenblicklichen Fluidpegel 86 in der Behälteranordnung 64 mißt und ein diesem entsprechendes Signal über eine Ausgabeleitung 88 an die Auswerteeinheit 34 ausgibt. Die Füllstands-Meßeinrichtung 84 kann, wie dargestellt, mittels eines Schwimmers den augenblicklichen Fluidpegel 86 ermitteln. Es ist jedoch auch vorstellbar, andere Füllstands-Meßeinrichtungen, wie beispielsweise kapazitive Füllstands-Meßeinrichtungen, einzusetzen.

Darüber hinaus kann im Behälter-Innenraum 80 bzw. mit Zugang zu diesem ein Drucksensor 87 (in Fig. 4 strichliert dargestellt) vorgesehen sein, um den Innendruck im Behälter-Innenraum zu erfassen.

Das Funktionsprinzip der Probenmeßeinrichtung 62 entspricht im wesentlichen dem der Probenmeßeinrichtung 64 gemäß Fig. 2. Durch Zugabe von Fluid über den Zulauf 66 wird bei verschlossenem Ventil 78 das oberhalb des Fluidpegels 86 liegende Behälter-Gasvolumen verkleinert, wodurch ein dem zugeführten Fluidvolumen entsprechendes Gas-Volumen aus dem Behälter-Innenraum 80 und bei geöffnetem Ventil 52 in den Probenaufnahmeraum 20 gedrückt wird. Eine Fluidzufuhr bei der Probenmeßeinrichtung 62 kommt somit einer Bewegung des Kolbens 24 bei der Probenmeßeinrichtung 46 gleich. Somit erfolgt die Probenvolumenbestimmung in Analogie zum geschilderten Ausführungsbeispiel gemäß Fig. 2.

Das Bereitstellen der Füllstands-Meßeinrichtung 84 innerhalb der Behälteranordnung 64 ermöglicht es, mehrere Messungen nacheinander durchzuführen, ohne daß aus dem Behälterraum 80 über den Ablauf 74 Fluid abgelassen werden muß. Mit anderen Worten muß der Pegel 86 nicht nach jeder Messung auf einen Referenzstand gebracht werden.

Die Probenmeßeinrichtung 62 hat ferner den Vorteil, daß es mit relativ geringen technischen Mitteln möglich ist, eine exakte Fluidmenge in den Behälter-Innenraum 80 einzugeben und somit eine sehr exakte Gasmengenänderung im Probenaufnahmeraum 20 durchzuführen. Selbstverständlich arbeitet die Probenmeßeinrichtung 62 in entsprechender Weise auch bei Abführen von Fluid aus dem Behälter-Innenraum 80 über den Ablauf 74 und das Ventil 78. In diesem Fall wird sich der Druck im Probenaufnahmeraum 20 verringern. Dabei ändert sich allerdings am Weg der Berechnung nichts.

Bei Vorsehen des Drucksensors 87 kann nach Fluidzu- bzw. abfuhr auch bei geschlossenem Ventil 52 die Gas-Parameter-Änderung im Behälter-Innenraum 80 erfaßt werden. Nach dem Öffnen des Ventils 52 ist es dann möglich, die in dem Probenaufnahmeraum 20 abgegebene bzw. aus diesem aufgenommene Gas-Menge exakt zu bestimmen, wobei Strömungswiderstände, beispielsweise Krümmer oder Drosseln, das Ergebnis nicht verfälschen.

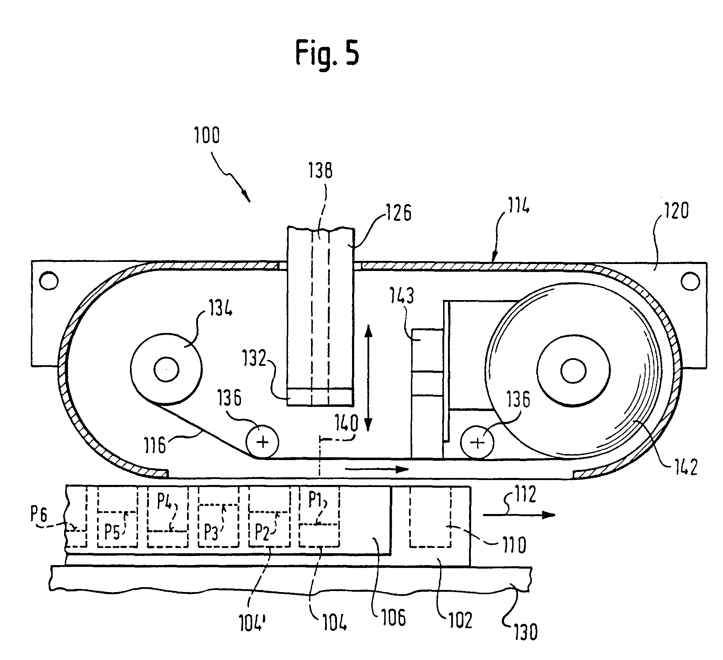

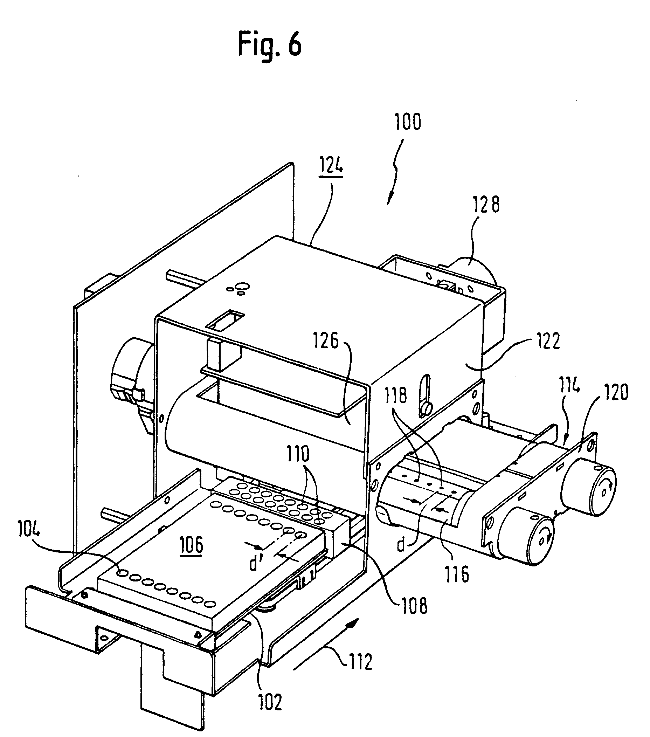

Fig. 5 und 6 zeigen eine konkrete Ausgestaltungsvariante einer erfindungsgemäßen Probenmeßeinrichtung. Fig. 6 zeigt eine perspektivisch dargestellte Probenmeßeinrichtung 100 mit einem Schlitten 102, auf den eine eine Vielzahl von Probengefäßen 104 aufweisende Mikrotiterplatte 106 in der Plattenebene unbeweglich aufgesetzt ist. Der Schlitten 102 umfaßt ferner eine Referenzmeßleiste 108, in der eine Mehrzahl von Referenzvolumen-Ausnehmungen 110 vorgesehen ist. Die Referenzvolumen-Ausnehmungen 110 liegen in Vorschubrichtung gemäß Pfeil 112 in Flucht mit den jeweiligen Probenausnehmungen 104.

Ferner umfaßt die Probenmeßeinrichtung 100 eine Folien-Kassette 114 mit einer darin integrierten, auf eine Vorratsrolle 134 aufgewickelten Folie 116, welche Durchgangslöcher 118 aufweist. Die Mitten zweier benachbarter Durchgangslöcher 118 weisen den selben Abstand d auf, wie die Mitten zweier quer zur Vorschubrichtung gemäß Pfeil 112 benachbart liegender Probenausnehmungen 104 bzw. Referenzvolumen-Ausnehmungen 110, wie dies durch die Bezeichnungen d' in Fig. 6 dargestellt ist.

Die Folien-Kassette 114 ist in Fig. 6 nur teilweise in die Probenmeßeinrichtung 100 eingeschoben dargestellt. Im Betriebszustand, d. h. bei vollständig eingeschobener Folien-Kassette 114 liegt eine Anschlagsplatte 120 der Folien-Kassette 114 an der Seitenwand 122 eines Gehäuses 124 der Probenmeßeinrichtung 100 an. Ferner wird beim Einschieben eine der beiden Rollen 134 und 142, bevorzugt beide Rollen 134, 142, mit einer nicht gezeigten Rollenantriebsvorrichtung zum automatischen Abwickeln der Vorratsrolle 134 in Eingriff gebracht. innerhalb des Gehäuses 124 ist eine Anschlußteileinheit 126 (Meßkopf) über Antriebsmittel 128 in vertikaler Richtung beweglich angeordnet, wie in Fig. 5 gezeigt.

Zum Betrieb der Probenmeßeinrichtung 100 wird auf Fig. 5 und 6 Bezug genommen. Fig. 5 zeigt die Probenmeßeinrichtung 100 unmittelbar vor der Probenvolumenmessung an der ersten Reihe von Probenausnehmungen 104 der Mikrotiterplatte 106. Die Mikrotiterplatte 106 ist auf den Schlitten 102 aufgesetzt, welcher sich auf dem schematisch angedeuteten Untergrund 130, beispielsweise einer nicht näher dargestellten Fördervorrichtung, in Vorschubrichtung gemäß Pfeil 112 schrittweise bewegt. In diesem Zustand wurde die Probenmeßeinrichtung 100 bereits durch eine Referenzmessung an der Referenzvolumen-Ausnehmung 110 kalibriert. Zur Messung der Probenvolumina, welche durch die jeweiligen Pegel $p_1$ bis $p_6$ in den Probenausnehmungen 104, 104' gekennzeichnet sind, wird die Anschlußteileinheit 126 zunächst über die Antriebsmittel 128 auf den Bereich der Mikrotiterplatte 106 zu bewegt, welcher die Probenausnehmung 104 mit der Probe mit dem Pegel $P_1$ aufweist, und auf diesen aufgesetzt. Allerdings kommt kein unmittelbarer Kontakt zwischen einer Dichtung 132 an der Unterseite der Anschlußteileinheit 126 und der Oberseite der Mikrotiterplatte 106 zustande, da die Anschlußteileinheit 126 zunächst auf die Folie 116 aufsetzt und diese unter Abwicklung von der Vorratsrolle 134 nach unten drückt.

Die Folie 116 ist zusätzlich über Führungsrollen 136 geführt. In Flucht mit der Durchgangsöffnung 138 der Anschlußteileinheit 126 und der Probenausnehmung 104 ist eine Foliendurchgangsöffnung positioniert, wie durch Achse 140 dargestellt. Eine Positionierung der Folien-Durchgangsöffnung erfolgt mittels eines Foliensensors 143, welcher Folien-Durchgangsöffnungen erfaßt und entsprechend die Abwicklung der Vorratsrolle 134 steuert. Zur Probenvolumenmessung wird, wie vorstehend beschrieben, die Anschlußteileinheit 126 über die Folie 116 auf die Mikrotiterplatte 106 aufgesetzt, wobei sich die Durchgangsöffnung 138, die Folien-Durchgangsöffnung und die Probenausnehmung 104 in axialer Flucht befinden.

Im Anschluß an das Aufsetzen des Probengefäß-Anschlußteils 126 wird eine Probenvolumenmessung gemäß vorstehender Verfahrensweise durchgeführt, wobei aufgrund der Folie 116 eine Übertragung von Probenmaterial aus der Probenausnehmung 104 auf die Unterseite der Dichtung 132 ausgeschlossen ist. Nach der Messung wird die Anschlußteileinheit 126 von der Mikrotiterplatte 106 abgehoben und in vertikaler Richtung nach oben bewegt, wobei anschließend die Folie 116 in gleicher Richtung wie die Vorschubrichtung gemäß Pfeil 112 auf eine weitere Rolle 142 soweit aufgewickelt wird, bis die nächste Foliendurchgangsöffnung in Flucht mit der Durchgangsöffnung 138 der Anschlußteileinheit 126 postioniert ist. Gleichzeitig wird der Schlitten 102 mit der Mikrotiterplatte 106 in Vorschubrichtung gemäß Pfeil 112 so weit bewegt, bis die nächste Probenausnehmung 104' ebenfalls in axialer Flucht zur Durchgangsöffnung 138 positioniert ist, woraufhin die Messung der Probe mit dem Pegel $p_2$ erfolgen kann. Dadurch, daß die Folie 116 in gleicher Richtung wie die Mikrotiterplatte 106 bewegt wird, ist ein Abtropfen von Probenmaterial von der Folie in ein Probengefäß 104 ausgeschlossen.

Es ist anzumerken, daß, wie in Fig. 6 gezeigt und bereits angesprochen, die Probenmeßeinrichtung 100 eine Mehrzahl von Probenausnehmungen 104 quer zur Vorschubrichtung gemäß Pfeil 112 aufweist, wobei die Anschlußteileinheit 126 ebenfalls eine der Probenausnehmungsanordnung entsprechende Mehrzahl von Anschlußteilen aufweist. Dadurch kann durch einmaliges Aufsetzen der Anschlußteileinheit 126 auf die Mikrotiterplatte 106 eine Messung sämtlicher in der Probenausnehmungsreihe befindlicher Proben durchgeführt werden.

Bei vollständig abgewickelter Vorratsrolle 134 kann die Folien-Kassette 114 aus der Probenmeßeinrichtung entnommen und durch eine neue Folien-Kassette ersetzt werden.

**Patentansprüche**

1. Analyseprobenmeßeinrichtung (100) eines Analysesystems mit gleichzeitiger Bestimmung der einzelnen Materialvolumina ($V_P$) mehrerer zu analysierender ggf. Gasanteile enthaltender Proben aus Feststoff- und/oder Flüssigstoff-Material, umfassend:

   - eine Mehrzahl von Probengefäßen, insbesondere Wells einer Mikrotiterplatte oder Cups, in einer Matrixanordnung zur Aufnahme der einzelnen Proben,
   - eine Mehrzahl von Probengefäß-Anschlußteilen (18) in einer der Probengefäß-Matrixanordnung entsprechenden Matrixanordnung oder einer einer Reihe der Probengefäß-Matrixanordnung entsprechenden Reihenanordnung, wobei an jeweils ein Probengefäß-Anschlußteil (18) jeweils ein Probengefäß (104) mit Abdichtung eines den jeweiligen Probengefäß-Innenraum enthaltenden Probenaufnahmeraums ankoppelbar ist,
   - im Falle der Reihenanordnung der Probengefäß-Anschlußteile (18) eine Vorschubeinrichtung zum schrittweisen Verschieben der Probengefäß-Matrixanordnung relativ zur Reihenanordnung in einer Vorschubrichtung (Pfeil 112) quer zur Reihenanordnung,
   - jeweils eine von einer Steuereinheit (32) angesteuerte Änderungsvorrichtung (24, 26, 28, 30) zur kontrollierten Änderung eines der folgenden Parameter Raum-Druck, Raum-Volumen, Raum-Temperatur und Gas-Menge im jeweiligen Probenaufnahmeraum,
   - jeweils einen Sensor (22) zur Messung eines der übrigen Parameter im jeweiligen Probenaufnahmeraum, und
   - eine mit dem jeweiligen Sensor (22) verbundene Auswerteeinheit (34) zur Bestimmung des Gasvolumens im jeweiligen Probenaufnahmeraum anhand der gemessenen Parameteränderungen oder/und zur Bestimmung des Probenvolumens ($V_p$) im jeweiligen Probengefäß (104) durch Differenzbildung von Probenaufnahmeraum-Volumen ($V_L + V_{G1}$) vor der Probenzugabe und Gasvolumen ($V_G$) nach der Probenzugabe.

2. Analyseprobenmeßeinrichtung (100) nach Anspruch 1, **gekennzeichnet durch** eine Folie (116), vorzugsweise Kunststoff-Folie, zwischen den jeweiligen Probengefäßen (104, 104') und Probengefäß-Anschlußteilen (18) mit einer der Probengefäß-Anschlußteil-Matrixanordnung bzw. -Reihenanordnung entsprechenden Mehrfachlochung (118), wobei die Folie (116) nach Abkopplung der Probengefäße (104, 104') entfernbar ist.

3. Analyseprobenmeßeinrichtung (100) nach Anspruch 2, **dadurch gekennzeichnet, daß** die Folie (116) von einer Folienbahn gebildet ist, die laufend von einer Folien-Vorratsrolle (134) abziehbar und nach Vorbeilauf an der Mehrzahl von Probengefäß-Anschlußteilen (126) auf eine weitere Rolle (142) aufwickelbar ist.

4. Analyseprobenmeßeinrichtung (100) nach Anspruch 2 oder 3, **gekennzeichnet durch** eine die Folien-Vorratsrolle (134) und die weitere Rolle (142) haltende Folien-Kassette (114).

5. Analyseprobenmeßeinrichtung (100) nach einem der vorangehenden Ansprüche, **dadurch gekennzeichnet, daß** im Bereich der Probengefäß-Matrixanordnung wenigstens ein Referenzvolumen-Gefäß (110), vorzugsweise in einer der Anordnung der Probengefäß-Anschlußteile (18) entsprechenden Anordnung, vorgesehen ist.

6.  Analyseprobenmeßeinrichtung (100) nach Anspruch 5, **dadurch gekennzeichnet, daß** das wenigstens eine Referenzvolumen-Gefäß (110) an einem die Probengefäß-Anordnung (106) tragenden Schlitten (102) ausgebildet ist.

7.  Analyseprobenmeßeinrichtung (100) nach einem der vorangehenden Ansprüche, **gekennzeichnet durch** eine Eingabeeinrichtung (36) für Meßparameter, wie z. B. Probengefäß-Innenraumvolumen ($V_L$).

8.  Analyseprobenmeßeinrichtung (100) nach einem der vorangehenden Ansprüche, **dadurch gekennzeichnet, daß** die jeweilige Änderungsvorrichtung (24, 26, 28, 30) eine Kolben-Zylinder-Anordnung (24, 18) umfaßt.

9.  Analyseprobenmeßeinrichtung (100) nach Anspruch 8, **gekennzeichnet durch** einen mit der Steuereinheit (32) verbundenen Sensor (30) für die momentane Kolbenstellung.

10. Analyseprobenmeßeinrichtung (100) nach Anspruch 8 oder 9, **dadurch gekennzeichnet, daß** die jeweilige Änderungsvorrichtung (24, 26, 28, 30) einen Spindelantrieb (26, 28) für den Kolben (24) aufweist.

11. Analyseprobenmeßeinrichtung (100) nach einem der vorangehenden Ansprüche, **gekennzeichnet durch** einen mit dem jeweiligen Probenaufnahmeraum verbundenen Druck-Sensor (22).

12. Analyseprobenmeßeinrichtung (100) nach einem der Ansprüche 8 bis 11, **dadurch gekennzeichnet, daß** jedes Probengefäß-Anschlußteil (18) einen im wesentlichen zylindrischen Gasaufnahmeraum ($V_{G1}$) umfaßt, in dem der Kolben (24) axialbeweglich und abdichtend angeordnet ist und der nach Ankopplung des Probengefäßes (104) mit dem Probengefäß-Innenraum unmittelbar verbunden ist.

13. Analyseprobenmeßeinrichtung (100) nach Anspruch 12, **dadurch gekennzeichnet, daß** der jeweilige Probengefäß-Innenraum und der jeweilige Gasaufnahmeraum ($V_{G1}$) miteinander im wesentlichen fluchten und vorzugsweise im wesentlichen gleichen Querschnitt aufweisen.

14. Analyseprobenmeßeinrichtung (100) nach einem dervorhergehenden Ansprüche, **gekennzeichnet durch** eine Dichtung (16) zwischen dem jeweiligen Probengefäß (12) und dem jeweiligen Probengefäß-Anschlußteil (18).

15. Analyseprobenmeßeinrichtung (100) nach einem der vorangehenden Ansprüche, **dadurch gekennzeichnet, daß** die jeweilige Änderungsvorrichtung eine steuerbare Druckgasquelle (58), insbesondere eine Druckgasflasche, umfaßt, mittels welcher nach Ankopplung der Probengefäße (12) die Gas-Menge in den jeweiligen den angekoppelten Probengefäßen (104) zugeordneten Probenaufnahmeraum änderbar ist.

16. Analyseprobenmeßeinrichtung (100) nach Anspruch 15, **dadurch gekennzeichnet, daß** zur Überwachung der Gas-Mengen-Änderung eine Überwachungseinrichtung (60), insbesondere eine Gas-Strömungs-Meßeinrichtung, zwischen der Druckgasquelle (58) und dem jeweiligen Probenaufnahmeraum vorgesehen ist.

17. Analyseprobenmeßeinrichtung (100) nach einem der vorangehenden Ansprüche, **dadurch gekennzeichnet, daß** die jeweilige Änderungsvorrichtung eine abschließbare, mit einem Fluid, beispielsweise Wasser, befüllbare Behälteranordnung (64) aufweist, die derart gestaltet ist, daß durch Zuführen bzw. Abführen von Fluid in die Behälteranordnung (64) die im jeweiligen Probenaufnahmeraum vorhandene Gas-Menge änderbar ist.

18. Analyseprobenmeßeinrichtung (100) nach Anspruch 17, **dadurch gekennzeichnet, daß** die Behälteranordnung (64) jeweils eine gesonderte, jeweils mit einer steuerbaren Ventilvorrichtung (68, 78) versehene Zuführ- und Abführleitung (66, 74) aufweist.

19. Analyseprobenmeßeinrichtung (100) nach Anspruch 17 oder 18, **dadurch gekennzeichnet, daß** der Füllstand (86) in der Behälteranordnung (64) über eine Füllstands-Meßeinrichtung (84) erfaßbar ist.

**Claims**

1.  An analysis sample measuring device (100) of an analysis system with simultaneous determination of the individual material volumes ($V_P$) of a plurality of samples of solid and/or liquid material which are to be analysed and may contain gas fractions, comprising:

    -   a plurality of sample containers, in particular wells of a microtitration plate or cups, in a matrix arrangement for holding the individual samples,

- a plurality of sample-container connection parts (18) in a matrix arrangement which corresponds to the sample container matrix arrangement or in a row arrangement which corresponds to one row of the sample container matrix arrangement, it being possible to couple one sample container (104) to each sample container connection part (18) so as to seal a sample-holding chamber which contains the interior of the respective sample container

- in the case of the row arrangement of the sample container connection parts (18), an advancing device for advancing the sample container matrix arrangement relative to the row arrangement in steps in a direction of advance (arrow 112) which is transverse with respect to the row arrangement,

- one alteration device (24, 26, 28, 30) in each sample-holding chamber, which alteration device is controlled by a control unit (32) and serves for the controlled alteration of one of the following parameters: chamber pressure, chamber volume, chamber temperature and amount of gas,

- one sensor (22) in each sample-holding chamber, for measuring one of the other parameters, and

- an evaluation unit (34), which is connected to the respective sensor (22), for determining the gas volume in the respective sample-holding chamber on the basis of the parameter alterations measured and/or for determining the sample volume ($V_p$) in the respective sample container (104) by forming the difference between the sample-holding chamber volume ($V_L + V_{G1}$) before the sample is added and the gas volume ($V_G$) after the sample has been added.

2. An analysis sample measuring device (100) as claimed in claim 1, which has a film or foil (116), preferably a plastic film, between the respective sample containers (104, 104') and sample container connection parts (18), having multiple perforations (118) which correspond to the matrix arrangement or row arrangement of the sample container connection parts, it being possible to remove the film or foil (116) after the sample containers (104, 104') have been uncoupled.

3. An analysis sample measuring device (100) as claimed in claim 2, wherein the film or foil (116) is formed by a web of film or foil which can be pulled off continuously from a film/foil supply reel (134) and can be wound onto a further reel (142) after it has passed the plurality of sample container connection parts (126).

4. An analysis sample measuring device (100) as claimed in claim 2 or 3, **characterised by** a film/foil cassette (114) which holds the film/foil supply reel (134) and the further reel (142).

5. An analysis sample measuring device (100) as claimed in any one of the preceding claims, wherein at least one reference volume container (110) is provided preferably in an arrangement which corresponds to the arrangement of the sample container connection parts (18), in the region of the sample container matrix arrangement.

6. An analysis sample measuring device (100) as claimed in claim 5, wherein at least one reference volume container (110) is formed on a carriage (102) which supports the sample container arrangement (106).

7. An analysis sample measuring device (100) as claimed in any one of the preceding claims, **characterised by** an input device (36) for inputting measurement parameters, such as for example sample-container interior volume ($V_L$).

8. An analysis sample measuring device (100) as claimed in any one of the preceding claims, wherein the respective alteration device (24, 26, 28, 30) comprises a piston-cylinder arrangement (24, 18).

9. An analysis sample measuring device (100) as claimed in claim 8, **characterised by** a sensor (30), which is connected to the control unit (32), for detecting the instantaneous piston position.

10. An analysis sample measuring device (100) as. claimed in claim 8 or 9, wherein the respective alteration device (24, 26, 28, 30) has a spindle drive (26,28) for the piston (24).

11. An analysis sample measuring device (100) as claimed in any one of the preceding claims, **characterised by** a pressure sensor (22) which is connected to the respective sample-holding chamber.

12. An analysis sample measuring device (100) as claimed in any one of claims 8 to 11, wherein each sample container connection part (18) comprises a substantially cylindrical gas-holding chamber ($V_{G1}$), in which the piston (24) is arranged in an axially moveable and sealing manner and which is directly connected to the sample-container interior after the sample container (104) has been coupled on.

**13.** An analysis sample measuring device (100) as claimed in claim 12, wherein the respective sample-container interior and the respective gas-holding chamber ($V_{G1}$) are substantially aligned with one another and preferably have substantially identical cross-sections.

**14.** An analysis sample measuring device (100) as claimed in any one of the preceding claims, **characterised by** a seal (16) between the respective sample chamber (12) and the respective sample chamber connection part (18).

**15.** An analysis sample measuring device (100) as claimed in any one of the preceding claims, wherein the respective alteration device comprises a controllable compressed-gas source (58), in particular a compressed-gas cylinder, by means of which, after the sample containers (12) have been coupled on, the amount of gas in the respective sample-holding chamber associated with the sample containers (104) which have been coupled on can be altered.

**16.** An analysis sample measuring device (100) as claimed in claim 15, wherein a monitoring device (60), in particular a gas-flow measuring device, is provided between the compressed-gas source (58) and the respective sample-holding chamber, in order to monitor the change in the amount of gas.

**17.** An analysis sample measuring device (100) as claimed in any one of the preceding claims, wherein the respective alteration device has a closable vessel arrangement (64) which can be filled with a fluid, for example water, and is designed in such a manner that, by feeding or discharging fluid into or from the vessel arrangement (64), it is possible to alter the amount of gas present in the respective sample-holding chamber.

**18.** An analysis sample measuring device (100) as claimed in claim 17, wherein the vessel arrangement (64) has separate feed and discharge lines (66, 74) which are each provided with a controllable valve arrangement (68, 78).

**19.** An analysis sample measuring device (100) as claimed in claim 17 or 18, wherein the filling level (86) in the vessel arrangement (64) can be recorded using a filling-level measuring device (84).

**Revendications**

**1.** Dispositif de mesure (100) d'échantillons à analyser d'un système d'analyse, avec détermination simultanée des volumes de matière ($V_P$) individuels de plusieurs échantillons à analyser, contenant éventuellement des fractions de gaz, d'une matière solide et/ou liquide, comportant :

- une pluralité de récipients à échantillons, en particulier des puits d'une plaque de micro-titrage ou des coupelles, dans une disposition en matrice, destinés à recevoir les différents échantillons,

- une pluralité de raccords (18) pour récipients à échantillons dans une disposition en matrice correspondant à la disposition en matrice des récipients à échantillons, ou dans une disposition en rangée correspondant à une rangée de la disposition en matrice des récipients à échantillons, à chaque raccord (18) pour récipients à échantillons pouvant être accouplé un récipient à échantillons (104) avec étanchéité d'une chambre de réception d'échantillons contenant le volume intérieur respectif du récipient à échantillons,

- en cas de disposition en rangée des raccords (18) pour récipients à échantillons, un dispositif d'avance pour l'avance pas à pas de la disposition en matrice des récipients à échantillons par rapport à la disposition en rangée, dans un sens d'avance (flèche 112) transversal à la disposition en rangée,

- un dispositif de variation (24, 26, 28, 30), commandé par une unité de commande (32), pour la variation contrôlée de l'un des paramètres suivants : pression de la chambre, volume de la chambre, température de la chambre et quantité de gaz contenue dans la chambre de réception respective des échantillons,

- un capteur (22) pour la mesure de l'un des autres paramètres dans la chambre de réception respective des échantillons, et

- une unité d'exploitation (34), reliée à chaque capteur (22), pour déterminer le volume de gaz dans la chambre de réception respective des échantillons, à l'aide des variations mesurées des paramètres et/ou pour déterminer le volume d'échantillon ($V_P$) dans le récipient à échantillons (104) respectif, par formation de la différence entre les volumes ($V_L + V_{G1}$) de la chambre de réception des échantillons, avant addition des échantillons et les volumes de gaz ($V_G$) après addition des échantillons.

**2.** Dispositif de mesure (100) d'échantillons à analyser selon la revendication 1, **caractérisé par** une feuille (116), de préférence une feuille en matière synthétique, entre les récipients à échantillons (104, 104') et les raccords (18) pour récipients à échantillons, avec une perforation multiple (118) correspondant à une disposition en matrice ou disposition en rangée des raccords pour récipients à échantillons, la feuille (116) pouvant être enlevée après désaccouplement des récipients à échantillons (104, 104').

3. Dispositif de mesure (100) d'échantillons à analyser selon la revendication 2, **caractérisé en ce que** la feuille (116) est formée par une bande de feuille qui peut être dévidée en continu d'une bobine de réserve de feuille (134) et qui, après avoir défilé devant une pluralité de raccords (126) pour récipients à échantillons, peut être enroulée sur une autre bobine (142).

4. Dispositif de mesure (100) d'échantillons à analyser selon la revendication 2 ou 3, **caractérisé par** une cassette pour feuille (114) qui maintient la bobine de réserve de feuille (134) et l'autre bobine (142).

5. Dispositif de mesure (100) d'échantillons à analyser selon l'une des revendications précédentes, **caractérisé en ce que** dans la zone de la disposition en matrice dès récipients à échantillons, il est prévu au moins un récipient à volume de référence (110), de préférence dans une disposition correspondant à la disposition des raccords (18) pour récipients à échantillons.

6. Dispositif de mesure (100) d'échantillons à analyser selon la revendication 5, **caractérisé en ce que** le ou les récipients à volume de référence (110) est ou sont formés sur un chariot (102) qui supporte l'agencement de récipients à essai (106).

7. Dispositif de mesure (100) d'échantillons à analyser selon l'une des revendications précédentes, **caractérisé par** un dispositif de saisie (36) de paramètres de mesure, tels que par exemple des volumes intérieurs ($V_L$) des récipients à essai.

8. Dispositif de mesure (100) d'échantillons à analyser selon l'une des revendications précédentes, **caractérisé en ce que** chaque dispositif de variation (24, 26, 28, 30) comporte un dispositif à cylindre et piston (24, 18).

9. Dispositif de mesure (100) d'échantillons à analyser selon la revendication 8, **caractérisé par** un capteur (30), relié à l'unité de commande (32), pour la position instantanée du piston.

10. Dispositif de mesure (100) d'échantillons à analyser selon la revendications 8 ou 9, **caractérisé en ce que** chaque dispositif de variation (24, 26, 28, 30) comporte un dispositif d'entraînement à vis (26, 28) pour le piston (24).

11. Dispositif de mesure (100) d'échantillons à analyser selon l'une des revendications précédentes, **caractérisé par** un capteur de pression (22) relié à la chambre de réception respective des échantillons.

12. Dispositif de mesure (100) d'échantillons à analyser selon l'une des revendications 8 à 11, **caractérisé en ce que** chaque raccord (18) pour récipients à échantillons comprend une chambre de réception de gaz ($V_{G1}$) sensiblement cylindrique, dans laquelle le piston (24) est disposé de manière à pouvoir se déplacer axialement et de façon étanche, et qui est reliée directement au volume intérieur du récipient à échantillons, après accouplement du récipient à échantillons (104).

13. Dispositif de mesure (100) d'échantillons à analyser selon la revendication 12, **caractérisé en ce que** chaque volume intérieur de récipient à échantillons et le volume de réception de gaz ($V_{G1}$) respectif sont sensiblement alignés entre eux et présentent de préférence sensiblement la même section transversale.

14. Dispositif de mesure (100) d'échantillons à analyser selon l'une des revendications précédentes, **caractérisé par** une garniture d'étanchéité (16) entre chaque récipient à échantillons (12) et son raccord (18).

15. Dispositif de mesure (100) d'échantillons à analyser selon l'une des revendications précédentes, **caractérisé en ce que** chaque dispositif de variation comporte une source de gaz sous pression (58) commandable, en particulier une bouteille de gaz sous pression, au moyen de laquelle, après accouplement des récipients à échantillons (12), on peut faire varier la quantité de gaz dans la chambre de réception d'échantillons respective, associée aux récipients à échantillons (104) accouplés.

16. Dispositif de mesure (100) d'échantillons à analyser selon la revendication 15, **caractérisé en ce que** pour surveiller la variation des quantités de gaz, il est prévu un dispositif de surveillance (60), en particulier un dispositif de mesure d'écoulement de gaz, entre la source de gaz sous pression (58) et la chambre de réception respective des échantillons.

17. Dispositif de mesure (100) d'échantillons à analyser selon l'une des revendications précédentes, **caractérisé en ce que** chaque dispositif de variation comporte un réservoir (64) qui peut être rempli avec un fluide, par exemple de l'eau, et qui est conçu de manière que l'on puisse faire varier la quantité de gaz se trouvant dans la chambre de réception respective des échantillons, par amenée ou évacuation de fluide dans le réservoir (64).

18. Dispositif de mesure (100) d'échantillons à analyser selon la revendication 17, **caractérisé en ce que** le réservoir (64) comporte un conduit d'arrivée et un conduit d'évacuation (66, 74) séparés, pourvus chacun d'un dispositif à soupape (68, 78) commandable.

19. Dispositif de mesure (100) d'échantillons à analyser selon la revendication 17 ou 18, **caractérisé en ce que** le niveau (86) dans le réservoir (64) peut être enregistré par un dispositif de mesure de niveau (84).

Fig. 1

Fig. 2

Fig. 3

Fig. 4

# Fig. 5

# Fig. 6